# EUROPÄISCHE PATENTANMELDUNG

(11) **EP 3 687 049 A1**
(43) Veröffentlichungstag der Anmeldung: **29.07.2020**
(21) Anmeldenummer: 20000006.5
(22) Anmeldetag: 09.01.2020
(51) Int. Cl.: H02K 21/38, H02K 41/03

(54) **MOTOR, ROTOR-STATOR-ANORDNUNG UND VERWENDUNG ZUM BETREIBEN EINES MOTORS**

(30) Priorität: 24.01.2019 DE 102019101778
(71) Anmelder: Isele, Norbert, 79365 Rheinhausen (DE)
(72) Erfinder: Isele, Norbert, 79365 Rheinhausen (DE)
(74) Vertreter: Mehl-Mikus, Claudia

(57) **Zusammenfassung**

Die vorliegende Erfindung stellt eine Motor-Stator-Anordnung (1) bereit, die einen Stator, der eine Grundplatte (4) aufweist, und einen Rotor mit zumindest einer Flussplatte (5) zur Führung des magnetischen Flusses aufweist. Dabei ist auf der Grundplatte (4) eine Vielzahl Eisenkerne (3) in einer Distanz (D) äquidistant voneinander beabstandet angeordnet, auf jedem Eisenkern (3) ein Magnet (2) angeordnet und um jeden Eisenkern (3) eine Spule (6) gewickelt. Die Flussplatte (5) ist über den Magneten (2) beweglich angeordnet und weist eine Länge auf, deren Abmessung der Summe der Längen zweier benachbarter Magnete (2) und der Distanz (D) entspricht. Erfindungsgemäß weist jede Spule (6) einen Schalter (7) auf, der von einem offenen Zustand (7') in einen geschlossenen Zustand (7") überführbar ist, wenn ein Ende (5') der Flussplatte (5) über dem jeweiligen Magneten (2) zu liegen kommt.

## Beschreibung

Die Erfindung betrifft einen Motor zum Erzeugen kinetischer Energie, eine Rotor-Stator-Anordnung dafür, sowie eine Verwendung der Rotor-Stator-Anordnung zum Betreiben eines Motors.

Aus dem Stand der Technik, insbesondere der EP 2 991 205 A1, sind elektrische Motoren bekannt, die reversibel als Induktionsgeneratoren genutzt werden können. Diese sind in der Regel ringförmig aufgebaut und weisen eine alternierende Anordnung aus Magneten und Spulen auf. Parallel zu der ringförmigen Anordnung sind Flussplatten angeordnet, die um eine Drehachse, die mit der Mittelachse des aus Magneten und Spulen gebildeten Rings übereinstimmt, gedreht werden. Durch diese beidseitig angeordneten Flussplatten wird ein Rotor gebildet, der relativ zu dem aus den Magneten gebildeten Stator bewegt werden kann. Im Induktionsfall verursacht die Bewegung dieser Flussplatten eine Änderung in dem durch die Magnete erzeugten dauerhaften Magnetfeld, wonach ein Strom in den Spulen induziert wird. Im umgekehrten Fall kann ein Strom in den Spulen auch eine Magnetfeldänderung hervorrufen, die dann eine Bewegung der Flussplatte induzieren können.

Ferner ist aus der DE 10 2009 025 298 A1 eine Rotor-Stator-Anordnung bekannt, die mehrere Eisenkerne aufweist, die in Reihe geschaltet sind und um die jeweils eine Spule angeordnet ist. Oberhalb der Eisenkerne sind Flussplatten angeordnet, die über die Eisenkerne hinwegbewegt werden. Die Anordnung ist linear oder kreisförmig.

Nachteilig am vorgenannten Stand der Technik ist, dass die bisher bekannten dafür notwendigen Rotor-Stator-Anordnungen meist aufwändig konstruiert sind und dass Gegenfelder innerhalb der Anordnungen induziert werden, die eine Bewegung der Flussplatten bremsen.

Ausgehend von diesem Stand der Technik ist es Aufgabe der vorliegenden Erfindung, eine verbesserte Rotor-Stator-Anordnung bereitzustellen, die einfach aufgebaut und kostengünstig in der Herstellung ist und bei der gleichzeitig die kinetische Energie der Flussplatte effektiver genutzt werden kann.

Diese Aufgabe wird durch eine Rotor-Stator-Anordnung mit den Merkmalen des Anspruchs 1 gelöst.

Die weitere Aufgabe, einen elektrischen Motor bereitzustellen, der einfach aufgebaut ist und zuverlässig arbeitet, wird durch den Motor mit den Merkmalen des unabhängigen Anspruchs 7 gelöst.

Die weitere Aufgabe, ein Verfahren zum Betreiben eines Motors so zu verbessern, dass die kinetische Energie der Flussplatte effektiver genutzt werden kann, wird durch die Verwendung mit den Merkmalen des unabhängigen Anspruchs 8 gelöst.

Weiterbildungen der Rotor-Startor-Anordnung, des Motors und des Verfahrens sind in den Unteransprüchen ausgeführt.

Eine erste Ausführungsform der Rotor-Stator-Anordnung weist einen Stator auf, der eine Grundplatte hat, und einen Rotor mit einer Flussplatte zur Führung des magnetischen Flusses. Es sind auch mehrere, in Bewegungsrichtung hintereinander angeordnete Flussplatten möglich.

Auf der Grundplatte ist eine Vielzahl Eisenkerne in einer Distanz D äquidistant voneinander beabstandet angeordnet, wobei auf jedem Eisenkern ein Magnet angeordnet und um jeden Eisenkern eine Spule gewickelt ist. Die Flussplatte ist über den Magneten beweglich positioniert und weist eine Länge auf, deren Abmessung in etwa der Summe der Längen zweier benachbarter Magnete und der Distanz D entspricht. Dabei kann die Länge der Flussplatte so bemessen sein, dass nur ein Magnet überspannt wird. Die Flussplatte kann aber auch mehrere Magnete, insbesondere drei bis vier Magnete überspannen.

In einem Bereich der Distanz D ist eine Spule um die Grundplatte angeordnet. Dabei umfasst die Spule in dem Abschnitt der Distanz zwischen zwei Magneten quer zu einer Längserstreckung die Grundplatte. Mehrere Spulen können bevorzugt in Reihe oder parallel geschaltet sein, je nachdem, wie ein induzierter Strom abgegriffen werden soll. Diese Spulen werden eingesetzt, wenn bspw. aus einer Abbremsung des Rotors aus einer hohen Drehzahl dieser zu einer kleineren Drehzahl wechselt oder stoppt. Der durch die Bewegungsänderung der Flussplatten veränderte magnetische Fluss induziert einen abgreifbaren Strom in den Spulen.

Erfindungsgemäß weist jede Spule einen Schalter auf, der von einem offenen Zustand in einen geschlossenen Zustand überführt wird, wenn ein Ende der Flussplatte über dem jeweiligen Magneten zu liegen kommt, wobei in dem offenen Zustand in der Spule kein Strom induzierbar ist.

Vorteilhaft ergeben sich durch die vorgenannte Anordnung Möglichkeiten, Rotor und Stator so zueinander zu bewegen, dass das Magnetfeld ständig wechselnde Flussänderungen, bzw. unterschiedliche Führungen der magnetischen Feldlinien erfährt. Diese magnetische Flussänderung kann zur Induktion von elektrischem Strom genutzt werden bzw. in der umgekehrten Nutzung als Motor zur Bewegung der Flussplatten durch Änderung des Magnetfeldes. Das Grundprinzip dieser Erfindung ist, dass die auf Abstand gehaltenen und aneinandergereihten Flussplatten als Rotor dienen. Die Magnete, die auf der Grundplatte angeordnet sind, sind dabei fest und bilden zusammen mit der Grundplatte den Stator. So wird vorteilhaft eine konstruktiv einfache Rotor-Stator-Anordnung gebildet, die einen Motor mit verbesserter Funktion ermöglicht. Aufgrund des einfachen Rotors ist die Anordnung auch kostengünstig in der Herstellung. Da nur die Flussplatten jeweils ummagnetisiert werden müssen, sind Verluste durch die Ummagnetisierung gering. Flussplatten sind dabei im Vergleich zu ihrer Längenabmessung dünn, auch hierdurch können Ummagnetisierungsverluste klein gehalten werden.

Ferner kann die bewusste Erzeugung und Steuerung der Gegeninduktivität in den Spulen um die Eisenkerne durch Zu- und Abschalten der Spulen wie folgt genutzt werden:
Durch die Bewegung der Flussplatten wird eine Flussänderung in den Spulen erzeugt und Spannung induziert. Ist der Schalter in einem offenen Zustand, also einer Offenstellung, fließt in der Spule kein Strom, da der Stromkreis nicht geschlossen ist. Nur bei geschlossenem Schalter (Schließstellung) fließt Strom und es entsteht eine Gegeninduktivität und damit ein gegengerichteter magnetischer Fluss. Da die Magnete eine konstante Flussdichte besitzen, wird der ursprüngliche magnetische Fluss durch den gegengerichteten Fluss reduziert, wodurch die Anziehungskraft des Magneten reduziert wird und auf die Flussplatte wirken somit (in der Position zwischen den Magneten) verschieden Anziehungskräfte. Diese Ungleichheit der Anziehungskräfte unterstützt die Flussplatte in Ihrer Fortbewegungsrichtung bzw. erzeugt eine Fortbewegung der Flussplatte, da sie von ihrer derzeitigen Position abgestoßen wird. Dazu ist eine Mindestgeschwindigkeit des Rotors, also der Flussplatten, vorteilhaft, die abhängig ist von der Form bzw. Größe der Flussplatten.

Die Rotor-Stator-Anordnung ist in einer bevorzugten Weiterbildung derart konstruiert, dass in dem sich schließenden magnetischen Kreis (wenn sich die Flussplatte auf den Magnet zubewegt) die Spule einen Schalter in Offenstellung hat und keine Gegeninduktivität erzeugt wird. Ferner soll in dem sich öffnenden magnetischen Kreis (wenn sich die Flussplatte vom Magnet wegbewegt) die Spule einen Schalter in Schließstellung haben, so dass eine Gegeninduktion erzeugt wird. Somit wird die Anziehungskraft des Magneten reduziert.

Es können Anordnungen mit vielen Magneten und vielen Flussplatten konstruiert werden.

Eine weitere Ausführungsform der erfindungsgemäßen Rotor-Stator-Anordnung sieht vor, dass die Rotor-Stator-Anordnung eine Vielzahl an Sensoren aufweist, die über eine elektrische Verbindung mit den Schaltern verbunden sind, wobei jeder Sensor einem Magnet zugeordnet ist. Die Sensoren sind oberhalb der Magnete in einem bestimmten Abstand zu diesen angeordnet und haben einen Erfassungsbereich, der die Oberfläche des Magneten überdeckt, so dass detektiert werden kann, wenn das Ende einer Flussplatte über einem Magneten zu liegen kommt. Die Sensoren sind bspw. induktive oder kapazitive Sensoren, es können ferner optische Sensoren eingesetzt werden.

In einer Weiterbildung sieht die Erfindung vor, dass die Magnete auf der Grundplatte äquidistant zueinander angeordnet sind, und dass die Magnete zylindrisch sind. Alternativ können die Magnete auch anders geformt sein, wie z. B. quaderförmig. Es ist vorgesehen, dass die Magnete Permanentmagnete sind, jedoch können auch elektromagnetische Magnete eingesetzt werden, um das dauerhafte Magnetfeld zu erzeugen.

In einer Weiterbildung der erfindungsgemäßen Rotor-Stator-Anordnung weist die Rotor-Stator-Anordnung eine Datenverarbeitungseinheit auf, die zur Erfassung der Daten der Sensoren und Schaltung der Spulen ausgebildet ist. Die Datenverarbeitungseinheit ist dazu ausgebildet, ferner in Abhängigkeit der erfassten Sensordaten die Steuerung der Schaltung der Spulen zu übernehmen.

Bevorzugt sieht die Erfindung in einer Weiterbildung vor, dass die Flussplatte und die Grundplatte aus einem ferromagnetischen Material bestehen. Hierbei sollen Materialien gewählt werden, die eine hohe Permeabilität aufweisen. Das kann zum Beispiel Eisen oder Stahl mit einem niedrigen Kohlenstoffanteil sein oder es können auch Legierungen aus Nickel und Eisen, Kobalt und Eisen sowie Aluminium und Eisen sein. Ferner können auch Ferrite und weitere ähnliche Materialien genutzt werden. Bevorzugt sind die Flussplatten sowie die Grundplatte dünn, wobei "dünn" im Sinne der Erfindung meint, dass die Dickenabmessung in einem Bereich von einigen Mikrometern bis zu wenigen Millimetern liegen kann. Dies dient dazu, Hysterese- sowie Wirbelstromverluste durch speziell verarbeitete Bleche zu vermeiden. Die Platten können massiv sein oder aus einer Vielzahl dünner Bleche zusammengesetzt sein. Die Magnete können mit ihrer Unterseite, also ihrer dem Rotor abgewandten Seite, mit dem ferromagnetischen Material der Grundplatte verbunden werden, sodass eine gute Führung der Magnetfeldlinien innerhalb der Grundplatte gegeben ist.

Erfindungsgemäß weist der Stator eine lineare oder ringförmige Grundplatte auf. Hierbei ist der Stator eine feststehende Einheit, die eine ebenfalls feststehende Grundplatte hat. "Fest" im Sinne der Erfindung meint hierbei auf einem Untergrund, zum Beispiel dem Erdboden o. ä. fest montiert, bzw. relativ zu einem sonst ebenfalls nicht beweglichen Bauteil montiert. Der Rotor ist dazu als bewegliches Bauteil ausgebildet, sodass sich eine Bewegung des Rotors relativ zu dem Stator ergibt, sobald der Rotor in Bewegung versetzt wird.

Die in den Magneten gespeicherte Energie kann somit in eine nutzbare kinetische gewandelt werden, weil die Flussplatten durch die verschiedenen Anziehungskräfte in Bewegung gesetzt oder gehalten werden. Eine entscheidende Rolle spielt die Gegeninduktion der Spulen. Welche Spule wann ein- oder ausgeschaltet wird kann auf verschiedene Arten realisiert werden. Bei einem linearen Aufbau können anhand von der zurückgelegten Strecke der Flussplatten die Spulen zu- oder abgeschaltet werden. Dazu können Sensoren genutzt werden, die erkennen, wo sich die Flussplatten befinden und wie schnell sie sich bewegen. Geeignete Sensoren sind bspw. induktive oder kapazitive Näherungssensoren, auch optische Sensoren können verwendet werden. Bei einem runden, ringförmigen Aufbau können die Spulen auch anhand von Winkel-Einsteilungen zu- und abgeschaltet werden. Dies kann alternativ zu einer sensorgestützten Anordnung genutzt werden, dabei können über ein Motorfeedback-System aufgrund der Winkelstellung des Rotors oder der Drehzahl die Schalter gesteuert werden.

In einer ringförmigen Anordnung kann die Anordnung so gestaltet werden, dass durch die Flussplatte im Rotor und die Grundplatte des Stators Plattenebenen definiert werden. Diese Plattenebenen können dabei normal zur Drehachse des Rotors vorliegen, oder alternativ axial zu dieser Drehachse liegen. Entsprechend können dazu die Flussplatten ringförmig bzw. kreisförmig oder rechteckig ausgestaltet sein. Dabei können Flussplatten auch entlang ihrer Längsausdehnung eben oder gebogen sein. Die Anordnung kann damit, sei sie linear oder ringförmig ausgestaltet, an jegliche Anwendungen angepasst werden.

Ferner kann vorgesehen sein, dass zwischen den Flussplatten in Richtung deren Längsausdehnung ein Luftspalt vorliegt oder alternativ ein magnetisch bzw. elektrisch isolierendes Material angeordnet ist. Dies dient dazu, die einzelnen Flussplatten voneinander abzuschirmen und den magnetischen Widerstand zwischen den Flussplatten zu erhöhen. Daraus folgt, dass eine Feldlinienführung bei einer ständigen Änderung des magnetischen Feldes erzielt werden kann. Als "magnetisch isolierend" gilt ein Material mit einer magnetischen Permeabilitätszahl kleiner als 1, insbesondere nahe 0. Elektrisch isolierend ist ein Werkstoff mit einem spezifischen Widerstand größer als 1·10¹⁰ Ω mm²/m, insbesondere größer als 1·10¹⁵ Ω mm²/m. Beide Angaben gelten für Normbedingungen (Zimmertemperatur etc.). Es kann aber auch vorgesehen sein, dass die Flussplatten zur Erhöhung des magnetischen Widerstands zwischen den Flussplatten geeignet geformt werden. Dazu können die Flussplatten abgerundete Ränder aufweisen und sich zu den Rändern hin verjüngen. Dabei können sich die Flussplatten in Bezug auf ihre Dicke und auch ihre Breite kontinuierlich verjüngen. Abgerundete bzw. sich verjüngende Ränder bilden keine abrupte Abbruchkante, wodurch Wirbelstromverluste in der Flussplatte verringert werden können.

Um ein dauerhaftes Magnetfeld zu erzeugen, können einfache Elektromagnete oder auch Permanentmagnete verwendet werden. In der Regel sind Permanent- oder Dauermagnete zu verwenden, die eine Flussdichte in einem Bereich von 0,1 bis 5 T, bevorzugt 0,3 bis 2,5 und besonders bevorzugt von 1,5 T erreichen können. Dies ist bspw. bei Magneten auf Seltenerd-, Neodym-Eisen-Bor- oder auch Samarium-Cobalt-Basis der Fall. Es können aber auch einfacher Stahl, Aluminium-Nickel-Cobalt, Ferrite oder nichtmetallische, organische Kunststoffe mit permanentmagnetischen Eigenschaften, wie z. B. PANiCNQ, als Magnetbasis dienen. Die zu wählende Feldstärke bemisst sich nach dem zu induzierenden Strom.

Die Erfindung betrifft ferner einen elektrischen Motor zum Erzeugen kinetischer Energie mit einer Vielzahl an Magneten, die dazu ausgebildet sind, ein dauerhaftes Magnetfeld zu erzeugen. Ferner sind eine oder mehrere Spule(n) und eine Mehrzahl an Flussplatten, sowie eine Grundplatte zur Führung des Magnetfelds vorgesehen. Erfindungsgemäß sind die vorgenannten Komponenten in einer Rotor-Stator-Anordnung nach den vorbeschriebenen Ausführungsformen angeordnet.

Dadurch kann ein sehr einfacher und zuverlässig arbeitender Motor aufgebaut werden, der durch die einfachen Komponenten auch kostengünstig in der Herstellung ist. Mit dem Motor kann die in den Permanentmagneten gespeicherte magnetische Energie in kinetische Energie umgewandelt werden, durch Antreiben der Flussplatten. Aufgrund der dünnen Flussplatten muss wenig Material ummagnetisiert werden, wodurch die Magnete kein Gegenfeld erfahren. Durch die Verwendung der Schalter und der Datenverarbeitungseinheit als Steuerungseinheit erzielt die erzeugte Gegeninduktion in der Spule an dem Magneten eine Schwächung des primären magnetischen Flusses, wodurch die Anziehungskräfte geschwächt werden und die Flussplatte in ihrer Bewegung über den Magneten hinweg unterstützt wird. Die Motorfunktion wird dadurch verbessert.

Nur für das Anlaufen des Motors, bis zum Erreichen einer Mindestdrehzahl des Rotors muss eine mechanische Kraft zum Antrieb des Rotors aufgebracht werden. Beim Abschalten des Motors oder Bremsen des Rotors von einer hohen auf eine niedrigere Drehzahl kann die kinetische Energie der Flussplatten in elektrische Energie umgewandelt werden, indem in den Spulen um die Grundplatte Strom induziert wird. Dazu kann der Motor eine Batterie oder einen Verbraucher aufweisen, wie einen Kondensator.

Um einen Motor zu bilden, sind die Flussplatten in geeigneter Weise miteinander verbunden, über eine zentrale Nabe drehbar gelagert und mit einem Antrieb bzw. einer Welle verbunden. Mittels einer elektrischen Schaltung sind die Spulen und weiteren elektrischen und elektronischen Bauteile miteinander verbunden und mittels einer geeigneten Schnittstelle auch nach außen abgreifbar bzw. kann Strom in den Motor eingebracht werden. Dabei kann der Motor auch im umgekehrten Fall als Induktionsgenerator benutzt werden. Der Rotor ist parallel zu dem Stator in einem bestimmten Abstand angeordnet und wird in Bewegung versetzt. Dabei werden die Flussplatten entlang der definierten Bewegungsrichtung des Motors relativ zur festen Grundplatte und damit relativ zu den Magneten bewegt. Bewegt sich der Rotor in Abhängigkeit der Position der Flussplatten nun über die alternierend angeordneten Permanentmagnete, werden die Feldlinien durch den Wechsel von Flussplatte zu magnetisch isolierendem Material und wiederum zur nächsten Flussplatte jeweils unterschiedlich geleitet. Damit wird eine Änderung des lokalen Magnetfelds hervorgerufen. Die Magnete sind auf der zur Rotorseite abgewandten Seite der Grundplatte, die aus dem ferromagnetischen Material besteht, verbunden. Durch die Bewegung des Rotors wird nun eine magnetische Flussänderung erzeugt, die auch als Änderung des magnetischen Flusses in den Spulen (Feldlinien werden durch die Grundplatte geleitet) hervorgerufen wird und dementsprechend wird ein Strom in diesen Spulen induziert, was in einer real abgreifbaren elektrischen Spannung resultiert.

Die Bewegungsrichtung der Flussplatten in der linearen Anordnung kann auch periodisch umgekehrt werden, sodass Oszillieren des Rotors über dem Stator erzeugt wird. Eine Oszillation im Sinne der Erfindung kann als Schwingung verstanden werden, die entweder durch eine Hin- und Herbewegung in einem linearen Induktionsgenerator oder eine Drehbewegung des Rotors in einem ringförmigen Induktionsgenerator und damit immer wieder auftretendes periodisches Vorbeigleiten einer bestimmten Flussplatte erzeugt wird. Hierdurch kann folglich ein Wechselstrom kleiner oder größerer Amplitude erzeugt werden.

In einer Ausführungsform einer Verwendung einer erfindungsgemäßen Rotor-Stator-Anordnung zum Betrieb des Motors sind die folgenden Schritte vorgesehen:
- in Bewegung Setzen der Flussplatte, dabei durch die Magnete Erzeugen eines magnetischen Flusses in der Flussplatte, wobei der magnetische Fluss eine durch die Magnetpolarisierung vorbestimmte Richtung hat,
- kontinuierlich Detektieren, ob ein Ende der Flussplatte über einem Magneten zu liegen kommt,
- bei Detektion des Endes der Flussplatte Schließen des Schalters von einem offenen Zustand in einen geschlossenen Zustand, dadurch Induzieren eines Stroms in der Spule, Erzeugen eines magnetischen Flusses, der dem magnetischen Fluss in der Flussplatte entgegengerichtet ist und dadurch Abstoßen der Flussplatte in ihrer Bewegungsrichtung, und
- nachdem das Ende der Flussplatte nicht mehr über dem Magnet liegt, Überführen des Schalters von dem geschlossenen Zustand in den geöffneten Zustand.

In einer Weiterbildung der Verwendung werden zur Detektion, ob ein Ende einer Flussplatte in dem Bereich des Magnets ist, dieses Ende mit Sensoren erfasst und mittels der Datenverarbeitungseinheit die Signale bearbeitet. Um die Sensoren zu nutzen, wird mit den Sensoren kontinuierlich erfasst, ob ein Ende der Flussplatte den Sensor bzw. dessen Sensorbereich passiert, und weiter, nachdem das Ende der Flussplatte durch den Sensor nicht mehr detektiert ist, also nicht mehr in dessen Erfassungsbereich liegt, der Schalter von dem geschlossenen Zustand in den geöffneten Zustand mittels eines Steuerbefehls der Datenverarbeitungseinheit überführt.

Weitere Ausführungsformen der Rotor-Stator-Anordnung sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Die Figuren sind lediglich eine schematische Darstellung einer Ausführungsform der Erfindung.

Dabei zeigen:
- **Fig. 1**: eine schematische Ansicht der erfindungsgemäßen Rotor-Stator-Anordnung mit mehreren Flussplatten in einer ersten Position,
- **Fig. 2**: eine schematische Ansicht der erfindungsgemäßen Rotor-Stator-Anordnung mit der Flussplatte in der ersten Position,
- **Fig. 3**: eine schematische Ansicht der erfindungsgemäßen Rotor-Stator-Anordnung mit der Flussplatte in einer zweiten Position, und
- **Fig. 4**: eine schematische Ansicht der erfindungsgemäßen Rotor-Stator-Anordnung mit der Flussplatte in einer dritten Position.

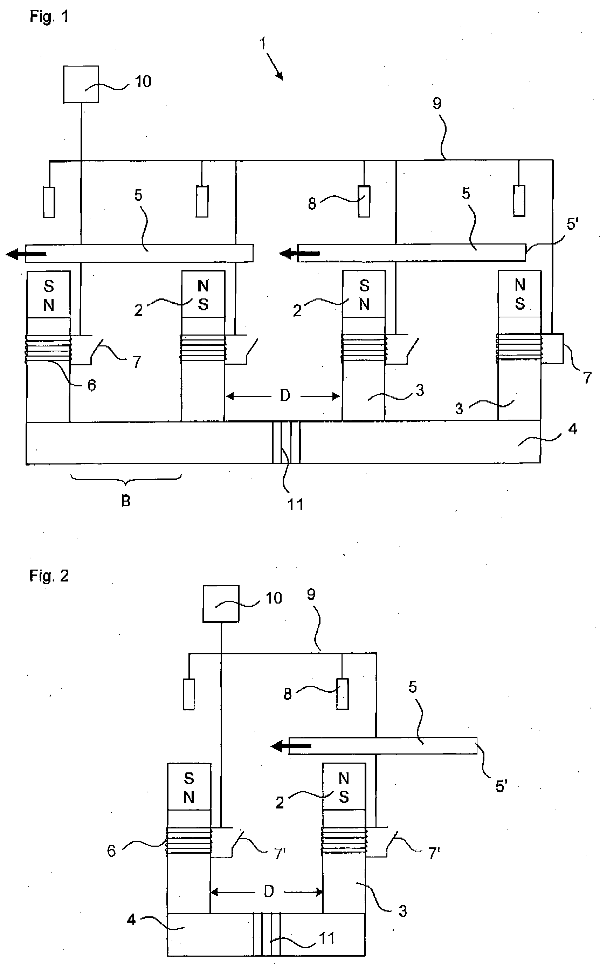

Die in **Fig. 1** gezeigte Rotor-Stator-Anordnung 1 weist einen Stator auf, der im Wesentlichen aus einer festen Grundplatte 4 sowie darauf angeordneten Eisenkernen 3 aufgebaut ist, Auf jedem Eisenkern 3 ist ein Magnet 2 angeordnet. Die Eisenkerne 3 sind zueinander äquidistant angeordnet, eine Distanz D der Eisenkerne 3 bemisst sich nach der Stärke der verwendeten Magnete 2 und ist dadurch bedingt, dass der magnetische Widerstand erhöht wird. Oberhalb der Magnete 2 sind mehrere Flussplatten 5 angeordnet, die beweglich sind.

Diese Flussplatten 5 bilden zusammen mit einer Bewegungseinheit (figurativ nicht dargestellt) einen Rotor, der relativ zu dem Stator bewegt werden kann. Zwischen den Magneten 2 sind Spulen 11 angeordnet. Die Spulen 11 sind in den Figuren schematisch gezeichnet, wobei Art und Weise, wie die Spulen 11 miteinander operativ zu koppeln sind, einem Fachmann bekannt ist. Die Spulen 11 sind an der Grundplatte 4 so angeordnet, dass sie diese quer zu einer Längserstreckung der Grundplatte 4 umfassen. Die Grundplatte 4 wirkt dabei als Spulenkern. Die Grundplatte 4 sowie die Flussplatten 5 bestehen aus einem ferromagnetischen Material, sodass Feldlinien eines durch die Magnete 2 erzeugten dauerhaften Magnetfelds innerhalb dieser Platten 4, 5 geführt werden.

Die Magnete 2 sind nebeneinander auf der Grundplatte 3 befestigt, sodass bei einem Magneten 2 sein Südpol zur Grundplatte 4 weist und sein Nordpol in Richtung der Flussplatten 5. Für einen zweiten Magneten 2, der direkt benachbart zum ersten Magneten 2 angeordnet ist, ist es genau andersrum, sodass dessen Nordpol zu der Grundplatte 4 weist und sein Südpol in Richtung der Flussplatte 5. Die Flussplatten 5 sind in Längserstreckung des Stators äquidistant voneinander beanstandet und mit der Bewegungseinheit verbunden, sodass sie relativ zu den feststehenden Magneten 2 bewegbar sind. Hierdurch wird ein Rotor gebildet, der relativ zu dem Stator bewegt werden kann. Die Grundplatte 4 sowie die Flussplatten 5 bilden jeweils Plattenebenen innerhalb des Stators respektive des Rotors. Diese Plattenebenen sind parallel zueinander angeordnet, sodass der Abstand der Flussplatten 5 zu den zum Rotor weisenden Oberflächen der Magnete 2 innerhalb der Rotor-Stator-Anordnung 1 konstant ist.

Um jeden Eisenkern 3 herum ist eine Spule 6 gewickelt (je Kern 3 eine Spule 6), die einen Schalter 7 aufweist. Diese Schalter 7 und damit auch die Spulen 6 sind über eine elektrische Verbindung 9 mit Sensoren 8 und einer Datenverarbeitungseinheit 10 verbunden. Die Sensoren 8 sind oberhalb der Magnete 2 angeordnet, wobei sie einen bestimmten Abstand zu den Flussplatten 5 einhalten.

In einer Bewegungsanordnung der Rotor-Stator-Anordnung 1 sind verschiedene Positionen möglich, wie **Fig. 2** bis 4 darstellen. Dabei ist in **Fig. 2** eine erste Position einer Flussplatte 5 gezeigt, wobei dort nur ein Magnetpaar dargestellt ist. Dabei wird das dauerhafte Magnetfeld durch diese beiden Magnete des Magnetpaares erzeugt. Die Schalter 7 sind in einer Offenstellung 7'. Die Flussplatte 5 bewegt sich auf den Magneten 2 zu, wobei zwischen der Flussplatte 5 und dem Magneten 2 eine Anziehungskraft besteht. Dadurch, dass der Schalter 7 offen ist, kann in der Spule 6 kein Strom induziert werden.

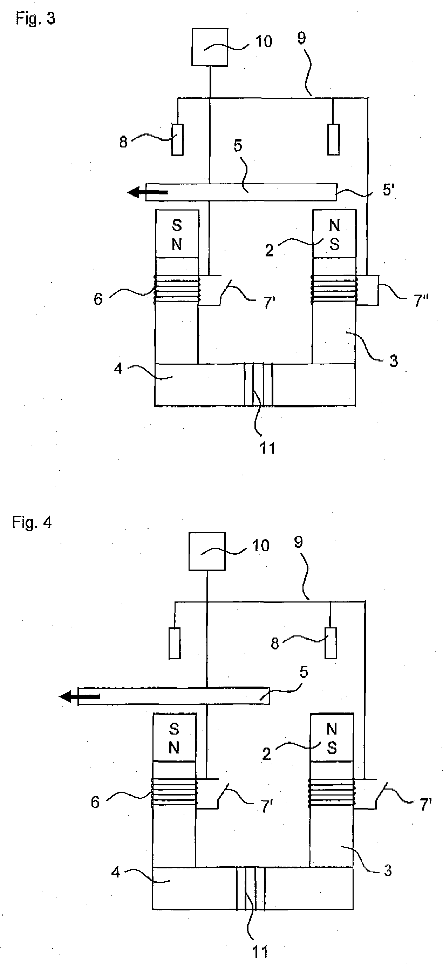

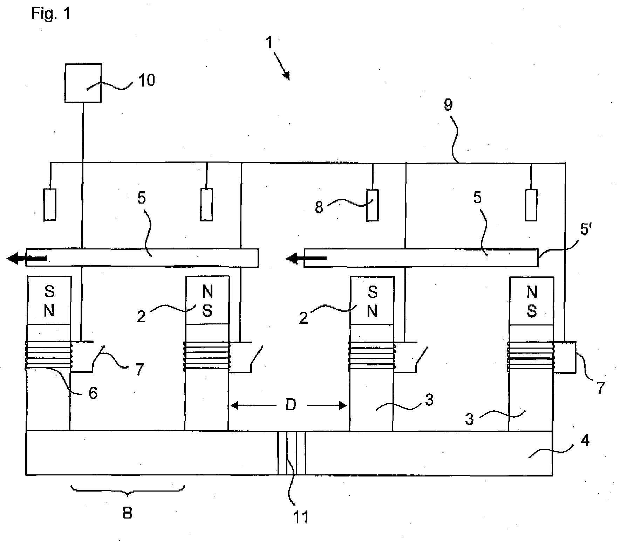

In einer zweiten Position, siehe **Fig. 3****,** ist die Flussplatte 5 entlang ihrer Bewegungsrichtung (nach links zeigender Pfeil in den Figuren) in ihrer Plattenebene weiter verschoben, sodass nun ein Überlapp mit dem Weiteren, benachbart angeordneten Magneten 2 erfolgt und ein Ende 5' der Flussplatte 5 über dem Magneten 2 zu liegen kommt. Hierdurch wird das Magnetfeld in der Weise beeinflusst, dass die Feldlinien sich auf die geänderte Position der Flussplatten 5 einstellen müssen. Diese veränderte Position gebietet nun, dass das Magnetfeld sich lokal an dieser Stelle ändert, und dort eine Erhöhung bzw. Erniedrigung, je nach Bewegungsrichtung, der Feldstärke erfolgt. Hierdurch wird das Magnetfeld besonders bei einer steten Bewegung der Flussplatte 5, also Änderung deren Position, ebenfalls periodisch verändert, sodass das Magnetfeld innerhalb der Grundplatte 4 und damit innerhalb der Spule 11 verändert wird und ein Strom in der Spule 11 induziert wird (im Generatorbetrieb). Gleichzeitig wird, wenn das Ende 5' über dem Magnet 2 zu liegen kommt, dies mittels des Sensors 8 detektiert und durch die Datenverarbeitungseinheit 10 wird ein Signal zum Schließen des Schalters 7 gegeben, der dann in eine Schließstellung 7" überführt wird. Dadurch wird in der Spule 6 ein Strom erzeugt, da das Magnetfeld die Spule 6 durchdringt. Der induzierte Strom in der Spule 6 in der Schließstellung 7" hat ein dem Magnetfeld der Magneten 2 entgegengerichtetes Magnetfeld zur Folge. Dies bewirkt, dass die Flussplatte 5 abgestoßen wird (die zuvor bestehende magnetische Anziehungskraft wird geschwächt), aufgrund der verschiedenen Anziehungskräfte der Magnetfelder, und die kinetische Energie der Flussplatte erhöht wird. Dazu ist eine Mindestgeschwindigkeit des Rotors, also der Flussplatten 5, notwendig, die abhängig ist von der Form bzw. Größe der Flussplatten 5.

Sobald die Flussplatte 5 abgestoßen wird, und den Sensorbereich des Sensors 8 bzw. den Bereich um den Magneten 2 verlassen hat, wird der Schalter 7 wieder von der Schließstellung 7" in die Offenstellung 7' überführt, wie **Fig. 4** zeigt, so dass kein Strom mehr in der Spule 6 fließt.

### BEZUGSZEICHENLISTE

- 1: Rotor-Stator-Anordnung
- 2: Magnet
- 3: Eisenkern
- 4: Grundplatte
- 5: Flussplatte
- 5': Ende der Flussplatte
- 6: Spule
- 7: Schalter
- 7': Offener Schalter
- 7": Geschlossener Schalter
- 8: Sensor
- 9: Elektrische Verbindung
- 10: Datenverarbeitungseinheit
- 11: Spule

- B: Bereich für Spule
- D: Distanz

## Patentansprüche

1. Rotor-Stator-Anordnung (1),
mit einem Stator, der eine Grundplatte (4) aufweist, und einem Rotor mit zumindest einer Flussplatte (5) zur Führung des magnetischen Flusses,
- wobei auf der Grundplatte (4) eine Vielzahl Eisenkerne (3) in einer Distanz (D) äquidistant voneinander beabstandet angeordnet ist,
- wobei auf jedem Eisenkern (3) ein Magnet (2) angeordnet ist,
- wobei um jeden Eisenkern (3) eine Spule (6) gewickelt ist, und
- wobei die Flussplatte (5) über den Magneten (2) beweglich angeordnet ist und eine Länge aufweist, deren Abmessung der Summe der Längen zweier benachbarter Magnete (2) und der Distanz (D) entspricht,
- wobei in einem Bereich (B) zwischen den Magneten (4a, 4b) zumindest der Distanz (D) eine Spule (11) um die Grundplatte (4) angeordnet ist,
**dadurch gekennzeichnet, dass**
jede Spule (6) einen Schalter (7) aufweist, der von einem offenen Zustand (7') in einen geschlossenen Zustand (7") überführbar ist, wenn ein Ende (5') der Flussplatte (5) über dem jeweiligen Magneten (2) zu liegen kommt, wobei in dem offenen Zustand (7') in der Spule (6) kein Strom induzierbar ist.

2. Rotor-Stator-Anordnung (1) nach Anspruch 1,
**dadurch gekennzeichnet, dass**
die Rotor-Stator-Anordnung (1) eine Vielzahl an Sensoren (8) aufweist, die über eine elektrische Verbindung (9) mit den Schaltern (7) verbunden sind, wobei jeder Sensor (8) einem Magnet (2) zugeordnet ist.

3. Rotor-Stator-Anordnung (1) nach Anspruch 1 oder 2,
**dadurch gekennzeichnet, dass**
die Rotor-Stator-Anordnung (1) eine Datenverarbeitungseinheit (10) aufweist, die zur Erfassung der Daten der Sensoren (8) und Schaltung der Spulen (6) ausgebildet ist.

4. Rotor-Stator-Anordnung (1) nach zumindest einem der Ansprüche 1 bis 3,
**dadurch gekennzeichnet, dass**
die Flussplatte (5) und die Grundplatte (4) aus einem ferromagnetischen Material bestehen,

5. Rotor-Stator-Anordnung (1) nach zumindest einem der Ansprüche 1 bis 4,
**dadurch gekennzeichnet, dass**
die Grundplatte (4) linear oder ringförmig ist, und dass
die Flussplatte (5) teilringförmig oder kreisförmig oder rechteckig ist, wobei die Flussplatte (5) entlang ihrer Längsausdehnung eben oder gebogen ist.

6. Rotor-Stator-Anordnung (1) nach zumindest einem der Ansprüche 1 bis 5,
**dadurch gekennzeichnet, dass**
in einer ringförmigen Rotor-Stator-Anordnung (1) durch die Flussplatte (5) im Rotor und die Grundplatte (4) im Stator Plattenebenen definiert sind, wobei die Plattenebenen des Rotors und des Stators normal oder axial zur Drehachse des Rotors liegen.

7. Elektrischer Motor mit einer Vielzahl an Magneten (2), die dazu ausgebildet sind, ein dauerhaftes Magnetfeld zu erzeugen, zumindest einer Spule (11) und zumindest einer Flussplatte (5) und einer Grundplatte (4) zur Führung des Magnetfelds, **dadurch gekennzeichnet, dass**
die vorgenannten Komponenten in einer Rotor-Stator-Anordnung (1) nach zumindest einem der Ansprüche 1 bis 6 angeordnet sind.

8. Verwendung einer Rotor-Stator-Anordnung (1) nach zumindest einem der Ansprüche 1 bis 6 für den Betrieb eines elektrischen Motors, wobei die Rotor-Stator-Anordnung (1) einen Stator mit einer Grundplatte (4) und einen Rotor mit zumindest einer Flussplatte (5) zur Führung des magnetischen Flusses aufweist, wobei
- auf der Grundplatte (4) eine Vielzahl Eisenkerne (3) in einer Distanz (D) äquidistant voneinander beabstandet angeordnet ist, wobei
- auf jedem Eisenkern (3) ein Magnet (2) angeordnet ist, und
- um jeden Eisenkern (3) eine Spule (6) gewickelt ist, und
- die Flussplatte (5) über den Magneten (2) beweglich angeordnet ist und eine Länge aufweist, deren Abmessung der Summe der Längen zweier benachbarter Magnete (2) und der Distanz (D) entspricht, und
wobei jede Spule (6) einen Schalter (7) aufweist, der von einem offenen Zustand (7') in einen geschlossenen Zustand (7") überführt wird, wenn ein Ende (5') der Flussplatte (5) über dem jeweiligen Magneten (2) zu liegen kommt, **umfassend die Schritte**
- in Bewegung setzen der Flussplatte (5), dabei durch die Magnete (2) Erzeugen eines magnetischen Flusses in der Flussplatte (5), wobei der magnetische Fluss eine durch die Magnetpolarisierung vorbestimmte Richtung hat,
- kontinuierlich Detektieren, ob ein Ende (5') der Flussplatte (5) über einem Magneten (2) zu liegen kommt,
- bei Detektion des Endes (5') der Flussplatte (5) Schließen des Schalters (7) von einem offenen Zustand (7') in einen geschlossenen Zustand (7"), dadurch Induzieren eines Stroms in der Spule (6), Erzeugen eines magnetischen Flusses, der dem magnetischen Fluss in der Flussplatte (5) entgegengerichtet ist und dadurch Abstoßen der Flussplatte (5) in ihrer Bewegungsrichtung, und
- nachdem das Ende (5') der Flussplatte (5) nicht mehr über dem Magnet (2) liegt, Überführen des Schalters (7) von dem geschlossenen Zustand (7") in den geöffneten Zustand (7').

9. Verwendung nach Anspruch 8,
**umfassend die Schritte**
- mit den Sensoren (8) kontinuierlich Erfassen, ob ein Ende (5') der Flussplatte (5) den Sensor (8) passiert, und
- nachdem das Ende (5') der Flussplatte (5) durch den Sensor (8) nicht mehr detektiert ist, Überführen des Schalters (7) von dem geschlossenen Zustand (7") in den geöffneten Zustand (7').
